# EUROPÄISCHE PATENTSCHRIFT

(11) **EP 0 456 082 B1**
(45) Veröffentlichungstag und Bekanntmachung des Hinweises auf die Patenterteilung: **22.12.1993**
(21) Anmeldenummer: 91106968.0
(22) Anmeldetag: 30.04.1991
(51) Int. Cl.: F16C 29/06

(54) **Kugellager für Längsbewegungen**
Rolling contact bearing for linear motion
Palier à contact de roulement pour déplacement linéaire

(30) Priorität: 11.05.1990 DE 4015124
(43) Veröffentlichungstag der Anmeldung: 13.11.1991
(73) Patentinhaber: SKF LINEARSYSTEME GmbH, D-97424 Schweinfurt (DE)
(72) Erfinder: Edelmann, Ludwig, W-8737 Sulzthal (DE); Glöckner, Hermann, W-8720 Schweinfurt (DE); Laszlofalvi, Zoltan, W-8720 Schweinfurt (DE); Mayer, Uwe, W-8732 Münnerstadt (DE); Walter, Lothar, W-8720 Schweinfurt (DE)

(56) Entgegenhaltungen:
- CH-A- 519 118
- DE-C- 2 725 355
- FR-A- 2 384 155

## Beschreibung

Die vorliegende Erfindung betrifft ein Kugellager für Längsbewegungen gemäß dem Oberbegriff des Anspruches 1.

Ein Kugellager der genannten Gattung ist bekannt, bei dem die Umlenkbahnen jeder Reihe von Kugeln radial nach innen zur Welle hin durch eine Anlauframpe des Käfigs geschlossen sind (DE-PS 27 25 355). Im Betrieb des bekannten Kugellagers bewegen sich die Kugeln längs den Führungs- und Rückführbahnen und werden an dieser Anlauframpe von der Welle radial abgehoben. Die entsprechenden Anlaufbewegungen und radialen Verlagerungen der Kugeln rufen aber im Kugellager Stoßkräfte hervor, die ein unerwünschtes Laufgeräusch des Kugellagers zur Folge haben können.

Die Anlauframpen des Kugellagers müssen übrigens mit komplizierten Werkzeugen in den Käfig und in die zugehörigen Deckel eingearbeitet werden. Schließlich sind die Anlauframpen des bekannten Kugellagers aber auch wegen ihrer Dünnwandigkeit verhältnismäßig empfindlich.

Der im Anspruch 1 gekennzeichneten Erfindung liegt demgegenüber die Aufgabe zugrunde, ein Kugellager für Längsbewegungen der genannten Gattung zu schaffen, welches äußerst geräuscharm läuft, robust gebaut ist und außerdem besonders wirtschaftlich hergestellt werden kann.

Mit dem Kugellager für Längsbewegungen der Erfindung wird erreicht, daß die Kugeln jeder Reihe, von der Führungsbahn oder von der Rückführbahn kommend, in die Umlenkbahn des betreffenden Deckels glatt und geräuschlos einlaufen. Ebenso werden die Kugeln jeder Reihe ohne abrupte radiale Verlagerung von der betreffenden Umlenkbahn zurück in die anschließende Führungs- oder Rückführbahn geleitet. Auf diese Weise erfahren die Kugeln bei ihrer Bewegung im Kugellager überhaupt keine Anlaufstöße. Das Kugellager der Erfindung hat dementsprechend eine besonders große Laufruhe und kann eine vorteilhaft kleine radiale Bauhöhe aufweisen.

Die gekrümmt verlaufenden Schulterabschnitte in der Bohrung des Käfigs und die entsprechend gekrümmt verlaufenden Wandabschnitte des betreffenden Deckels lassen sich beim erfindungsgemäßen Kugellager durch Axialwerkzeuge wirtschaftlich einarbeiten. Dabei können der Käfig als auch die beiden zugehörigen Deckel eine Form erhalten, die eine relativ stoßfeste und robuste Ausbildung des Kugellagers zur Folge hat.

Vorteilhafte Weiterbildungen der Erfindung sind in den Unteransprüchen gekennzeichnet.

Die Weiterbildung nach Anspruch 2 hat zur Folge, daß die unbelasteten Kugeln jeder endlosen Reihe durch den Schlitz der Rückführ- und Umlenkbahn bis zur Mantelfläche der Welle vorragen und auf dieser geführt werden.

Mit der Weiterbildung nach Anspruch 3 wird erreicht, daß die Kugeln jeder Reihe von radial inneren Schlitzrändern der Schlitze festgehalten werden, so daß diese bei ausgebauter Welle aus den Kugellager nicht herausfallen können.

Die Weiterbildungen nach Anspruch 4 bis 9 weisen auf Ausgestaltungen des Käfigs und der beiden Deckel hin, die eine besonders wirtschaftliche Fertigung des Kugellagers ermöglichen.

Schließlich wird mit der Weiterbildung nach Anspruch 10 noch der Vorteil erzielt, daß sowohl die Führungsbahnen und Rückführbahnen des Käfigs als auch die Umlenkbahnen der beiden Deckel mit Axialschiebern in einer Gießform eingeformt werden können, so daß sich eine wirtschafliche Massenfertigung des Käfigs und der Deckel ergibt.

Das erfindungsgemäße Kugellager für Längsbewegungen wird in der nachfolgenden Beschreibung zweier Ausführungsbeispiele anhand der zugehörigen Zeichnungen näher beschrieben. Es zeigen:
- Fig. 1: den Querschnitt durch ein in der Bohrung eines Gehäuses eingebautes erfindungsgemäßes Kugellager für Längsbewegungen,
- Fig. 2: den Längsschnitt entlang A - A in Figur 1, jedoch ohne Gehäuse,
- Fig. 3: den Längsschnitt durch einen der beiden Deckel des in Figur 1 gezeigten Kugellagers im ausgebauten Zustand,
- Fig. 4: den Längsschnitt durch den Käfig des in Figur 1 gezeigten Kugellagers im ausgebauten Zustand,
- Fig. 5: den Querschnitt durch ein abgeändertes Kugellager für Längsbewegungen und
- Fig. 6: den Längsschnitt entlang B - B in Figur 5.

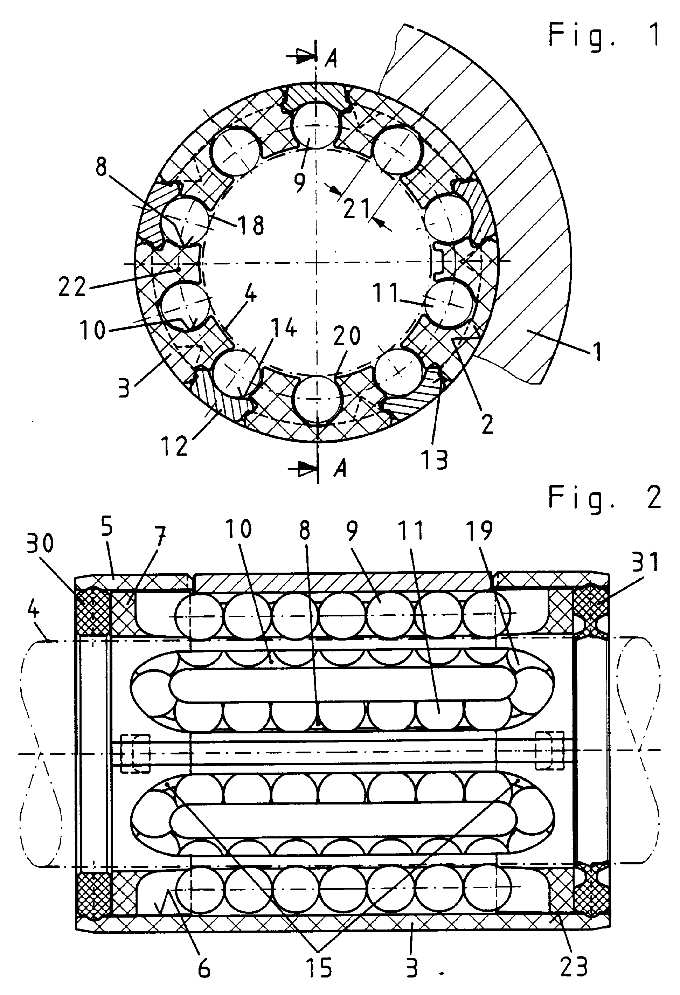

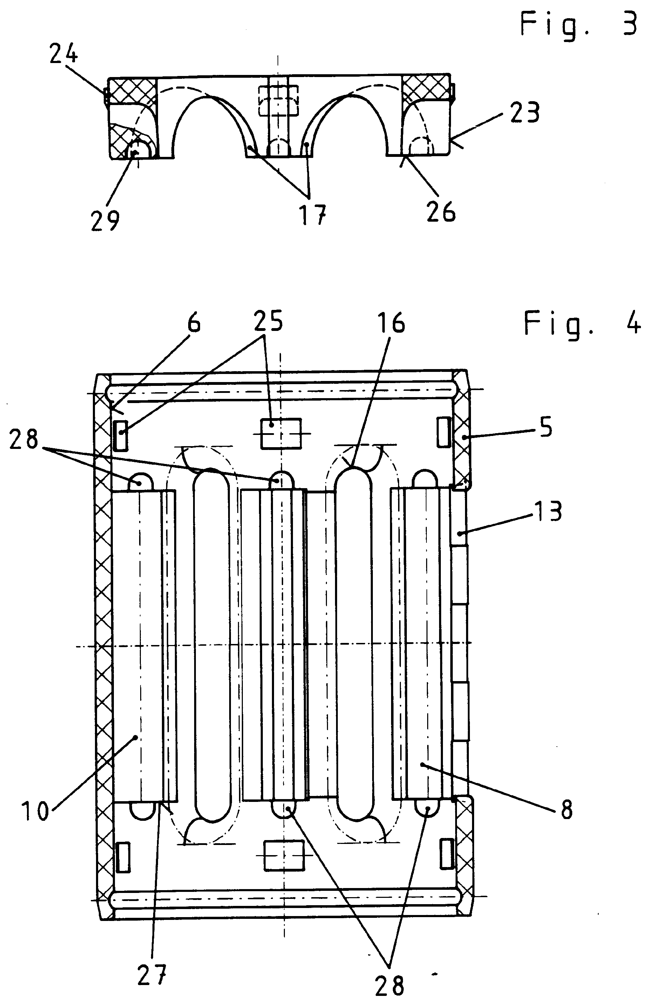

Mit 1 ist in Figur 1 ein Gehäuse bezeichnet, in dessen zylindrischer Bohrung 2 ein Käfig eines seitensymmetrischen Kugellagers für Längsbewegungen eingebaut ist. Der Käfig 3 ist hülsenförmig ausgebildet, so daß dieser mit einer Innenfläche eine zylindrische Welle 4 - siehe strichpunktierte Darstellungen in Figur 1 und 2 - vollständig umgibt.

An jedem seiner beiden Enden ist am Käfig ein ringförmiger Deckel 7 befestigt, der auf einer zylindrischen Bohrungsfläche 6 jeweils eines Endabschnittes 5 des Käfigs 3 sitzt (Figur 2).

Der Käfig 3 hat axiale Führungsbahnen 8 für belastete Kugeln 9 und axiale Rückführbahnen 10 für unbelastete Kugeln 11. Der Käfig 3 und seine beiden Deckel 7 bestehen aus einem Elastomer-Gießwerkstoff, sie sind jeweils im Spritzgießverfahren in einer Gießform (nicht gezeigt) hergestellt. Die Gießform des Käfigs kann in an sich bekannter Weise Axialschieber zum Einformen der Führungsbahnen 8 und Rückführbahnen 10 des Käfigs 3 besitzen.

Jeweils eine Führungsbahn 8 und eine Rückführbahn 10 sind abwechselnd am Umfang des Käfigs 3 angeordnet. Radial über jeder Führungsbahn 8 ist im Käfig ein Laufbahnelement 12 aus Stahl eingebaut. Jedes Laufbahnelement 12 ist in einer radial durchgehenden Öffnung 13 des Käfigs 3 unverlierbar eingeschnappt, es hat eine in der Bohrung des Gehäuses 1 radial abgestützte Außenseite und eine mit einer längsverlaufenden rillenförmigen Laufbahn 14 für die belasteten Kugeln 9 versehene Innenseite.

Bei axialer Hin- und Herbewegung der Welle 4 rollen die Kugeln 9 zwischen der Laufbahn 14 des betreffenden Laufbahnelementes 12 und einer zylindrischen Mantelfläche der Welle 4 und übertragen dabei eine radiale Belastung von der Welle 4 über das Laufbahnelement 12 zur Bohrung 2 des Gehäuses 1.

Die beiden Deckel 7 besitzen auf ihrer Innenseite am Umfang verteilt angeordnete, halbkreisförmig verlaufende Umlenkbahnen 15. Jede Umlenkbahn 15 verbindet jeweils das Ende einer Führungsbahn 8 mit dem Ende einer benachbarten Rückführbahn 10. Dabei ist jede Umlenkbahn 15 durch einen entsprechend halbförmig gekrümmt verlaufenden Schulterabschnitt 16 auf der Innenfläche des Käfigs 3 und einen diesem gegenüberstehenden, parallel dazu gekrümmt verlaufenden, innenseitigen Wandabschnitt 17 des Deckel 7 begrenzt.

Jeweils eine Führungsbahn 8, eine Rückführbahn 10 und zwei einander axial gegenüberliegend angeordnete endseitige Umlenkbahnen 15 bilden eine in sich geschlossene Bahn, in der eine endlose Reihe von Kugeln 9, 11 eingebaut ist.

Jede geschlossene Bahn des Kugellagers hat einen entlang dieser verlaufenden, zur Welle 4 hin offenen Schlitz, der aus einem axial verlaufenden Schlitz 18 der Führungsbahn 8, einem halbkreisförmig verlaufenden Schlitz 19 der beiden Umlenkbahnen 15 und einem axial verlaufenden Schlitz 20 der Rückführbahn 10 zusammengesetzt ist. Dabei mündet der Schlitz 19 jeder Umlenkbahn 15 an seinen Enden in den Schlitz 18 der anschließenden Führungsbahn 8 bzw. in den Schlitz 20 der anschließenden Rückführbahn 10.

Die radial innere Schlitzbreite 21 des Schlitzes 19 der Umlenkbahnen 15 ist genauso groß wie die innere Schlitzbreite der Rückführbahnen 10, sie ist genügend groß, so daß die unbelasteten Kugeln 11 bis zur Welle 4 hin radial nach innen aus dem Schlitz 19 und 20 herausragen und somit auf der Welle 4 radial geführt werden.

Die Schlitzbreite 21 ist übrigens etwas kleiner als der Durchmesser der Kugeln 11. Ebenso ist die radial innere Schlitzbreite des Schlitzes 18 jeder Führungsbahn 8 etwas kleiner als der Durchmesser der Kugeln 9. Auf diese Weise können die Kugeln 9, 11 aus dem Kugellager radial nach innen nicht herausfallen, wenn die Welle 4 aus dem Kugellager herausgezogen und entfernt ist.

Die Umlenkbahnen 15 der beiden Deckel 7 haben durch den Schulterabschnitt 16 und den Wandabschnitt 17 gebildete seitliche Führungswände, welche eine die Kugeln 11 zum Teil umfassende, im wesentlichen kreisabschnittförmige Querschnittskontur besitzen. Ebenso haben die axial verlaufenden Führungs- und Rückführungsbahnen 8 bzw. 10 seitliche Führungswände, welche eine die Kugeln 9 bzw. 11 zum Teil umfassende, im wesentlichen kreisabschnittförmige Querschnittskontur aufweisen.

Dabei haben die Führungs- und Rückführbahnen 8, 10 und die Umlenkbahnen 15 Querschnittmitten, die auf einem gemeinsamen, zur Achse der Welle 4 konzentrischen Zylinder 22 liegend angeordnet sind. Die Bohrungsfläche 6 jedes Endabschnittes 5 des Käfigs 3 deckt die Umlenkbahnen 15 des betreffenden Deckels 7 radial von außen ab.

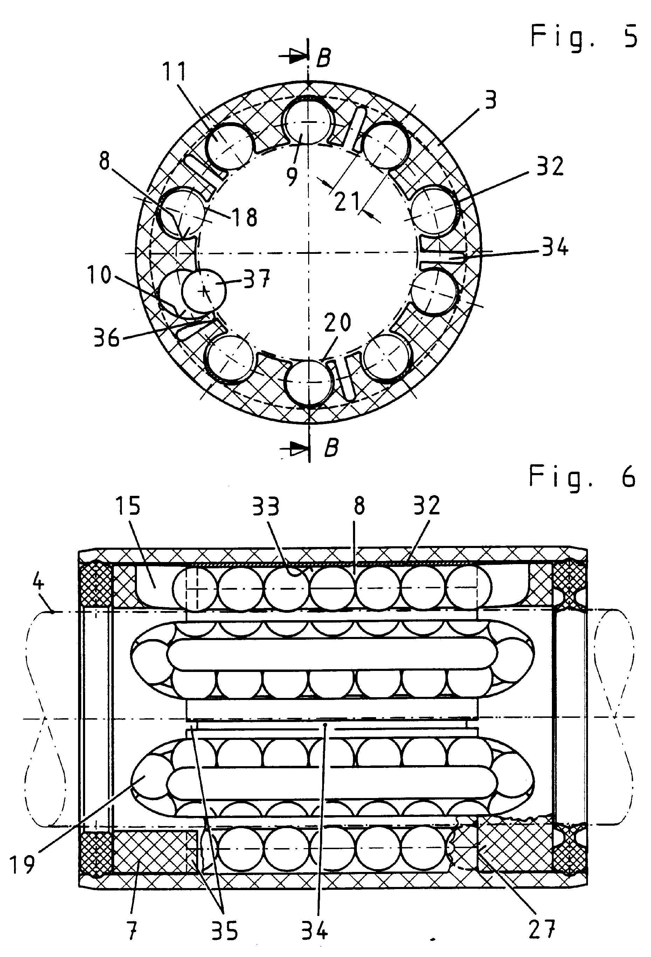

Jeder Deckel 7 hat eine auf der Bohrungsfläche 6 sitzende Mantelfläche 23, die mit am Umfang angeordneten, über die Mantelfläche 23 radial nach außen vorragenden Haltenasen 24 versehen ist. Die Haltenasen 24 sind in entsprechende, radial durchgehende Vertiefungen 25 der Bohrungsfläche 6 des Käfigs 3 einschnappend und formschlüssig eingreifend angeordnet (Figur 3 und 4).

Außerdem hat jeder Deckel 7 axial nach innen weisende ebene Stirnflächenabschnitte 26. Jeweils ein Stirnflächenabschnitt 26 ist zwischen zwei am Umfang benachbarten Umlenkbahnen 15 am Deckel 7 angeformt. Sämtliche Stirnflächenabschnitte 26 des Deckels 7 sind auf jeweils einem diesem gegenüberliegenden ebenen Stützflächenabschnitt 27 des Käfigs 3 fest anliegend angeordnet.

Im vorliegenden Fall hat jeder Stützflächenabschnitt 27 einen axialen zapfenförmigen Vorsprung 28, der in einer Rundlochvertiefung 29 des zugehörigen Stirnflächenabschnitts 26 eingreift (Figur 3 und 4).

Bei dem in Figur 2 dargestellten Kugellager ist am linken Ende des Käfigs 3 noch ein Dichtring 30 eingesetzt, der mit der Mantelfläche der Welle 4 einen engen Dichtspalt bildet. Am rechten Ende hat der Käfig 3 einen Dichtring 31, dessen Dichtlippen auf der Mantelfläche der Welle 4 in Längsrichtung gleiten.

In Figur 5 und 6 ist ein abgeändertes Kugellager für Längsbewegungen dargestellt, welches ähnlich wie das vorhergehend beschriebene Kugellager gebaut ist, denn dieses besitzt ebenfalls axiale Führungs- und Rückführbahnen 8 bzw. 10 eines Käfigs 3 und halbkreisförmig verlaufende Umlenkbahnen 15 zweier endseitiger Deckel 7. Die Bahnen 8, 10 und 15 haben auch einen zur Welle 4 hin offenen Schlitz 18, 19 bzw. 20.

Beim abgeänderten Kugellager ist jedoch jedes Laufbahnelement durch eine keramische oder metallische Schicht 32 auf einem radial äußeren Wandungsabschnitt 33, der in Querschnittkreis abschnittförmigen Führungsbahn 8 des Käfigs 3 hergestellt. Zum Aufbringen der Schicht 32 kann ein Spritz- oder Aufdampf-Verfahren (Plasmastrahlverfahren) angewendet werden.

Der Käfig 3 hat zwei endseitige Deckel 7, deren ebene Stirnflächenabschnitte auf jeweils einem diesem gegenüberliegenden ebenen Stützflächenabschnitt 27 des Käfigs 3, z. B. durch Kleben oder Ultraschallschweißen, unlösbar befestigt sind.

In seiner Bohrung besitzt der Käfig 3 im Gießverfahren mit Axialschiebern (nicht gezeight) eingeformte radiale Einschnitte 34, die durch jeweils zwei einander axial gegenüberstehende Stützflächenabschnitte 27 des Käfigs 3 hindurchgehen. Jeder Einschnitt 34 ist radial nach innen, zur Welle 4 hin, offen und radial nach außen geschlossen. An einem oder an beiden Enden mindestens eines Einschnittes 34 greift ein höchstens bis zum Stirnflächenabschnitt des axial gegenüberliegenden Deckels 7 reichender axialer Vorsprung 35 eines Stützflächenabschnittes 27 des betreffenden Deckels 7 in den Einschnitt 34 formschlüssig ein.

Jeder Einschnitt 34 verläuft in unmittelbarer Nähe einer der Rückführbahnen 10 des Käfigs 3, so daß zwischen der Rückführbahn 10 und den Einschnitt 34 ein dünnwandiger, biegeelastischer Käfigabschnitt 36 gebildet ist.

Beim Einfüllen der Kugeln 9, 11 in den mit oder ohne Deckel 7 versehenen Käfig 3 kann jede Kugel in die Bohrung des Käfigs 3 eingeführt, von dort radial nach außen gedrückt und in die Rückführbahn 10 eingeschnappt werden (siehe Kugel 37 in Figur 5). Dabei wird der Käfigabschnitt 36 in Umfangsrichtung etwas elastisch beiseite gebogen, so daß sich die innere Breite 21 des Schlitzes 20 kurzzeitig vergrößert.

Im Rahmen des Erfindungsgedankens lassen sich die oben beschriebenen Ausführungsbeispiele abändern. So können z. B. unterschiedlich große Kugeln je Reihe im Kugellager für Längsbewegungen eingebaut sein. In diesem Fall können die belasteten Kugeln der Reihe mit den größeren Kugeln auch in einer längsverlaufenden Laufbahnrille der ansonst zylindrischen Welle laufen und somit ein Drehmoment zwischen der Welle und dem betreffenden Laufbahnelement des Käfigs übertragen. Die zugehörige Rückführbahn verläuft dann in einer gegenüber der Führungsbahn etwas radial nach außen versetzten Lage, so daß die in den beiden Umlenkbahnen und in der anschließenden Rückführbahn sich entlang bewegenden unbelasteten größeren Kugeln auf einem zylindrischen Abschnitt der Welle geführt werden.

Auch braucht der Käfig nicht als am Umfang geschlossene Hülse ausgebildet zu sein. Vielmehr können Käfig und zugehörige Deckel auch einen gemeinsamen, in Längsrichtung durchgehenden Schlitz aufweisen, so daß der Käfig mit seiner Innenfläche die Welle nur zum Teil umgibt. In diesen Schlitz können dann Stützelemente eines Fundamentes oder dergleichen eingreifen, welche mit der Welle kraftschlüssig verbunden sind und diese auf dem Fundament abstützen.

## Patentansprüche

1. Kugellager für Längsbewegungen entlang einer Welle bestehend aus:
- einem in einer Bohrung eines Gehäuses festsetzbaren Käfig (3), der eine Innenfläche aufweist, die dazu dient, eine Welle (4) zumindest zum Teil zu umgeben, der mit axialen Führungsbahnen (8) für zwischen einem radial äußeren Laufbahnelement (12) und der Welle rollende belastete Kugeln (9) und der mit axialen Rückführbahnen (10) für unbelastete Kugeln (11) versehen ist,
- an jedem Ende des Käfigs (3) befestigten Deckeln (7) mit Umlenkbahnen (15), die jeweils eine Führungsbahn (8) mit einer Rückführbahn (10) endseitig verbinden,
- und in diesen Bahnen (8, 10, 15) in endloser Reihe geführten Kugeln (9, 11),
wobei die Führungsbahnen (8) und die Rückführbahnen (10) einen entlang diesen Bahnen (8, 10) verlaufenden, zur Welle (4) hin offenen Schlitz (18, 20) aufweisen,
dadurch gekennzeichnet,
daß die Umlenkbahnen (15) der beiden Deckel (7) einen zur Welle (4) hin offenen, in den Schlitz (18) der zugehörigen Führungsbahn (8) und in den Schlitz (20) der zugehörigen Rückführbahn (10) einmündenden Schlitz (19) besitzen, der durch jeweils einen entlang der Umlenkbahn (15) gekrümmt verlaufenden Schulterabschnitt (16) auf der Innenfläche des Käfigs (3) und einen parallel dazu gekrümmt verlaufenden innenseitigen Wandabschnitt (17) des betreffenden Deckels (7) begrenzt ist.

2. Kugellager nach Anspruch 1,
dadurch gekennzeichnet,
daß zum Führen der unbelasteten Kugeln (11) jeder Reihe auf der Welle (4) sowohl der Schlitz (19) der Umlenkbahnen (15) jedes Deckels (7) als auch der Schlitz (20) der Rückführbahnen (10) des Käfigs (3) eine ein Herausragen der Kugeln (9, 11) bis zur Welle (4) zulassende radial innere Schlitzbreite (21) aufweisen.

3. Kugellager nach Anpruch 2,
dadurch gekennzeichnet,
daß die radial innere Schlitzbreite (21) der Führungs- und Rückführbahnen (8, 10) des Käfigs (3) und der Umlenkbahnen (15) der beiden Deckel (7) etwas kleiner als der Durchmesser der Kugeln (9 bzw. 11) ist.

4. Kugellager nach einem der vorhergehenden Ansprüche,
dadurch gekennzeichnet,
daß die Führungsbahnen (8) und Rückführbahnen (10) des Käfigs (3) und die Umlenkbahnen (15) der beiden Deckel (7) seitliche Führungswände, welche eine die Kugeln (9 bzw. 11) zum Teil umfassende, im wesentlichen kreisabschnittförmige Querschnittskontur besitzen, aufweisen.

5. Kugellager für Längsbewegungen entlang einer zylindrischen Welle nach einem der vorhergehenden Ansprüche,
dadurch gekennzeichnet,
daß die Führungsbahnen (8) und Rückführbahnen (10) des Käfigs (3) und die Umlenkbahnen (15) der beiden Deckel (7) Querschnittmitten aufweisen, die auf einem gemeinsamen, zur Achse der Welle (4) konzentrischen Zylinder (22) liegend angeordnet sind.

6. Kugellager nach einem der vorhergehenden Ansprüche,
dadurch gekennzeichnet,
daß der Käfig (3) an seinen beiden Enden jeweils einen Endabschnitt (23) mit einer die Umlenkbahnen (15) des betreffenden Deckels (7) radial von außen abdeckenden Borhrungfläche (6) aufweist.

7. Kugellager nach Anspruch 5,
dadurch gekennzeichnet,
daß jeder Deckel (7) eine Mantelfläche (23) mit am Umfang angeordneten, radial nach außen vorragenden Haltenasen (24) aufweist, welche in entsprechende radiale Vertiefungen (25) in der Bohrungsfläche (6) des Endabschnittes (5) des Käfigs (3) einschnappend angeordnet sind.

8. Kugellager nach einen der vorhergehenden Ansprüche,
dadurch gekennzeichnet,
daß jeder Deckel (7) zwischen zwei am Umfang benachbarten Umlenkbahnen (15) jeweils einen axial nach innen weisenden Stirnflächenabschnitt (26) aufweist, der auf einem diesem gegenüberliegenden Stützflächenabschnitt (27) des Käfigs (3) fest anliegend angeordnet ist.

9. Kugellager nach Anspruch 8,
dadurch gekenneichnet,
daß jeder Stützflächenabschnitt (27) des Käfigs (3) einen axialen Vorsprung (28) besitzt, der in eine Vertiefung (29) des zugehörigen Stirnflächenabschnitts (26) des Deckels (7) formschlüssig eingreifend angeordnet ist.

10. Kugellager nach einem der vorhergehenden Ansprüche,
dadurch gekennzeichnet,
daß der Käfig (3) und/oder die beiden Deckel (7) aus einem Gießwerkstoff im Gießverfahren hergestellt sind (ist).

## Claims

1. A ball bearing for longitudinal movement along a shaft (4) comprising:
- a cage (3) which can be secured in a bore of a housing, which has an inner surface serving to surround at least partly a shaft (4) and which is provided with axial guide tracks (8) for balls (9) under load and rolling between a radially outer raceway element (12) and the shaft and which is provided with axial return tracks (10) for balls (11) not under load,
- covers (7) secured to each end of the cage (3) and having reversal tracks (15) which in each case connect one track (8) with one return track (10) at the end face,
- and balls (9, 11) guided in an endless row in these tracks (8, 10, 15),
wherein the guide tracks (8) and the return tracks (10) have a slot (18, 20) open towards the shaft (4) and extending along these tracks (8, 10), characterised in that the reversal tracks (15) of the two covers (7) have a slot (19) which is open towards the shaft (4), which opens into the slot (18) of the associated guide track (8) and into the slot (20) of the associated return track (10), and which is defined by a respective shoulder portion (16) on the inner surface of the cage (3), which shoulder portion extends in a curve along the reversal track (15), and by an inside wall portion (17) of the respective cover (7) extending parallel thereto in a curve.

2. A ball bearing according to Claim 1, characterised in that for guiding the unloaded balls (11) of each row on the shaft (4) both the slot (19) of the reversal tracks (15) of each cover (7) and the slot (20) of the return tracks (10) of the cage (3) have a radially inner slot width (21) allowing the balls (9, 11) to protrude as far as the shaft (4).

3. A ball bearing according to Claim 2, characterised in that the radially inner slot width (21) of the guide and return tracks (8, 10) of the cage (3) and of the reversal tracks (15) of the two covers (7) is slightly smaller than the diameter of the balls (9 and 11 respectively).

4. A ball bearing according to any one of the preceding Claims, characterised in that the guide tracks (8) and return tracks (10) of the cage (3) and the reversal tracks (15) of the two covers (7) are provided with lateral guide walls which have a substantially segment-shaped cross-sectional contour partly enclosing the balls (9 and 11).

5. A ball bearing for longitudinal movement along a cylindrical shaft according to any one of the preceding Claims, characterised in that the guide tracks (8) and return tracks (10) of the cage (3) and the reversal tracks (15) of the two covers (7) have cross-sectional centres which are arranged to lie on a common cylinder (22) concentric to the axis of the shaft (4).

6. A ball bearing according to any one of the preceding Claims, characterised in that at both of its ends the cage (3) has a respective end portion (23) with a bore surface (6) covering radially from the outside the reversal tracks (15) of the respective cover (7).

7. A ball bearing according to Claim 5, characterised in that each cover (7) has a circumferential surface (23) with retaining studs (24) which are arranged on the periphery and protrude radially outwards, and which are arranged to snap into corresponding radial recesses (25) in the bore surface (6) of the end portion (5) of the cage (3).

8. A ball bearing according to any one of the preceding Claims, characterised in that each cover (7) has, between two reversal tracks (15) adjacent the periphery, a respective axially inwardly facing end face portion (26) which is arranged firmly abutting on a support surface portion (27) of the cage (3) situated opposite thereto.

9. A ball bearing according to Claim 8, characterised in that each support surface portion (27) of the cage (3) has an axial projection (28) which is arranged to engage in form-locking manner in a recess (29) of the asscociated end face portion (26) of the cover (7).

10. A ball bearing according to any one of the preceding Claims, characterised in that the cage (3) and/or the two covers is (are) manufactured in a casting process from a cast material.

## Revendications

1. Roulement à billes pour déplacement linéaires le long d'un arbre (4), composé:
- d'une cage (3) qui peut être immobilisée dans un alésage d'un carter, laquelle cage comporte une surface intérieure qui entoure au moins partiellement un arbre (4) et est pourvue de pistes de guidage (8) axiales pour des billes (9) chargées qui roulent entre l'arbre et un élément (12) formant chemin de roulement, situé radialement à l'extérieur, ainsi que de pistes de retour (10) pour des billes non chargées (11),
- de couvercles (7) qui sont fixés à chaque extrémité de la cage (3) et comportent des pistes de changement de direction (15) qui relient chaque fois l'extrémité d'une piste de guidage (8) à l'extrémité d'une piste de retour (10), et
- à l'intérieur de ces pistes (8, 10, 15), de billes (9, 11) qui sont guidées en rangées sans fin,
les pistes de guidage (8) et les pistes de retour (10) présentant une fente (18, 20) qui est ouverte en direction de l'arbre (4) et s'étend le long desdites pistes (8, 10), caractérisé par le fait que les pistes de changement de direction (15) des deux couvercles (7) comportent une fente (19) ouverte en direction de l'arbre (4) qui débouche dans la fente (18) de la piste de guidage (8) concernée et dans la fente (20) de la piste de retour (10) concernée, laquelle fente est délimitée par une partie épaulement (16) courbe qui s'étend le long de la piste de changement de direction (15), sur la surface intérieure de la cage (3), et par une partie de paroi (17) intérieure courbe du couvercle (7) concerné qui s'étend parallèlement à la première.

2. Roulement à billes selon la revendication 1, caractérisé par le fait que, pour guider sur l'arbre (4) les billes non chargées (11) de chaque rangée, la fente (19) des pistes de changement de direction (15) de chaque couvercle (7) et la fente (20) des pistes de retour (10) de la cage (3) présentent une largeur (21), radialement côté intérieur, qui permet aux billes (9, 11) de faire saillie jusqu'à l'arbre (4).

3. Roulement à billes selon la revendication 2, caractérisé par le fait que largeur (21), radialement coté intérieur, de la fente des pistes de guidage et des pistes de retour (8, 10) de la cage (3) et des pistes de changement de direction (15) des deux couvercles (7) est légèrement inférieure au diamètre des billes (9 ou 11).

4. Roulement à billes selon l'une des revendications précédentes, caractérisé par le fait que les pistes de guidage (8) et les pistes de retour (10) de la cage (3) et les pistes de changement de direction (15) des deux couvercles (7) comportent des parois latérales de guidage qui présentent un profil en section sensiblement en forme de secteur de cercle qui entoure partiellement les billes (9 et 11).

5. Roulement à billes pour déplacements linéaires le long d'un arbre cylindrique selon l'une des revendications précédentes, caractérisé par le fait que les pistes de guidage (8) et les pistes de retour (10) de la cage (3) et les pistes de changement de direction (15) des deux couvercles (7) présentent des centres en section qui sont situés sur un cylindre (22) commun concentrique avec l'axe de l'arbre (4).

6. Roulement à billes selon l'une des revendications précédentes, caractérisé par le fait que la cage (3) présente à ses deux extrémités une partie d'extrémité (23) avec une surface d'alésage (6) qui ferme radialement côté extérieur les pistes de changement de direction (15) du couvercle (7) concerné.

7. Roulement à billes selon la revendication 5, caractérisé par le fait que chaque couvercle (7) présente une surface périphérique (23) avec, disposés sur son pourtour, des ergots de retenue qui font saillie radialement en direction de l'extérieur, lesquels ergots s'enclenchent dans des cavités (25) radiales adaptées de la surface (6) de l'alésage de la partie d'extrémité (5) de la cage (3).

8. Roulement à billes selon l'une des revendications précédentes, caractérisé par le fait que chaque couvercle (7) présente entre deux pistes de changement de direction (15) voisines sur le pourtour une partie de surface frontale (26) tournée axialement vers l'intérieur qui est vient en appui contre une partie de surface de contact (27) de la cage (3).

9. Roulement à billes selon la revendication 8, caractérisé par la fait que chaque partie de surface de contact (27) de la cage (3) comporte une saillie (28) axiale qui est disposé de manière à pénétrer par complémentarité de forme dans une cavité (29) de la partie de surface frontale (26) correspondante du couvercle (7).

10. Roulement à billes selon l'une des revendications précédentes, carctérisé par le fait que la cage (3) et/ou les deux couvercles (7) sont fabriqués en un matériau moulable selon un procédé de moulage.
